# EUROPEAN PATENT SPECIFICATION

(11) **EP 2 045 300 B1**
(45) Date of publication and mention of the grant of the patent: **09.11.2011**
(21) Application number: 08017110.1
(22) Date of filing: 29.09.2008
(51) Int. Cl.: C09D 11/00

(54) **Aqueous colorant dispersion, method of producing the aqueous colorant dispersion, and aqueous ink for inkjet recording**
Wässrige Färbedispersion, Verfahren zur Herstellung der wässrigen Färbedispersion und wässrige Tinte zur Tintenstrahlaufzeichnung
Dispersion de colorant aqueux, procédé de production de la dispersion de colorant aqueux, et encre aqueuse pour enregistrement à jet d'encre

(30) Priority: 01.10.2007 JP 2007257874
(43) Date of publication of application: 08.04.2009
(73) Proprietor: FUJIFILM Corporation, Minato-ku Tokyo (JP)
(72) Inventor: Hosokawa, Takafumi, Ashigarakami-gun Kanagawa (JP); Kato, Takahiro, Ashigarakami-gun Kanagawa (JP); Sasada, Misato, Ashigarakami-gun Kanagawa (JP); Ishizuka, Takahiro, Ashigarakami-gun Kanagawa (JP)
(74) Representative: HOFFMANN EITLE

(56) References cited:
- JP-A- 2007 051 199
- US-A1- 2006 142 417

## Description

### BACKGROUND OF THE INVENTION

### Field of Invention

The present invention relates to an aqueous colorant dispersion having excellent dispersibility of colorant, a method for producing the aqueous colorant dispersion, and an aqueous ink composition for ink jet recording.

### Technical Field

Paints and inks have come to be aqueous in accordance with the increase in the need for resource protection, environmental protection, stability in operation and the like.
Qualities such as flowability, storage stability, glossiness of cured film, visibility or coloring property are required for the aqueous paints and the aqueous inks in a similar manner as for oil-based paints and oil-based inks. However, ordinary dispersing methods do not provide sufficient qualities to aqueous paints or aqueous inks since most pigments are significantly inferior in adaptabilities to aqueous vehicles such as pigment dispersibility compared to their adaptabilities to oil-based vehicles. While the use of various additives such as aqueous pigment dispersing-resins or surfactants has been investigated, this has not provided an aqueous paint or an aqueous ink which satisfies all of the aforementioned adaptabilities and is equivalent to conventionally-used oil-based paints or oil-based inks having high qualities.

In view of addressing the above circumstances, there has been proposed an aqueous pigment ink having a pigment, a dispersing agent, a water-soluble organic solvent and water, in which the dispersing agent is a polymer having a hydrophilic portion and a hydrophobic portion, and the hydrophilic portion contains, as constituent monomers, 3 to 25 mol% of a long-chainnonionic group-containing monomer having a phenyl group at its terminal and 5 to 60 mol% of α,β-ethylenic unsaturated carboxylic acid (for example, see Japanese Patent (JP) No. 3444920).
There has been also proposed an aqueous pigment dispersion-containing composition for preparing an aqueous pigment ink used for inkjet-recording including: an aqueous pigment dispersion for preparing an aqueous pigment ink used for the inkjet-recording containing an organic pigment, an acrylic copolymer (A), a basic substance and water; and an acrylic copolymer (B) which does not coat the organic pigment, wherein: 85% by mass or more of a total of polymerization units of the acrylic copolymer (A) consists of a total of a (meth)acrylic acid ester-based monomer having benzene ring and a (meth)acrylic acid monomer; the acrylic copolymer (A) has an acid value of 40-100 mgKOH/g and a hydroxyl value of 10 mgKOH/g or less; the acrylic copolymer (B) has a (meth)acrylic acid ester monomer having a benzene ring and a (meth)acrylic acid monomer as essential components; and the acrylic copolymer (B) has an acid value of 40-100 mgKOH/g (for example, see Japanese Patent Application Laid-Open (JP-A) No. 2007-051199).

### SUMMARY

In JP 3444920, the long-chainnonionic group-containing monomer having a phenyl group at its terminal is regarded as the hydrophilic portion, and the content thereof in the polymer is insufficient, which results in insufficient pigment dispersibility when the dispersing agent is synthesized in accordance with the disclosure of JP 3444920. JP-A No. 2007-051199 also fails to provide satisfactory properties as an aqueous colorant dispersion since a diameter of dispersed particles of the pigment cannot be made sufficiently small.

In consideration of the above, the present invention provides an aqueous colorant dispersion which has a finely dispersed colorant and is excellent in stability over time, as well as a method for producing the aqueous colorant dispersion. The present invention further provides an aqueous ink for ink jet recording containing the aqueous colorant dispersion.

Namely, one aspect of the present invention is an aqueous colorant dispersion comprising: a colorant (A); a polymer (B); and an aqueous liquid medium (I), the polymer (B) being a copolymer comprising a hydrophilic structural unit and a hydrophobic structural unit; the hydrophobic structural unit comprising a hydrophobic structural unit (a) comprising a benzene ring which is not directly bonded to an atom that forms a main chain of the polymer (B); the hydrophilic structural unit comprising a hydrophilic structural unit (b) comprising an ionic group; a content of the hydrophobic structural unit with respect to a total mass of the polymer (B) exceeding 80% by mass and being less than 100% by mass; the polymer (B) comprising a structural unit (c) different from the hydrophobic structural unit (a) and the hydrophilic structural unit (b); and a content of the structural unit (c) with respect to a total mass of the polymer (B) exceeding 15% by mass and being less than 90% by mass and the structural unit (c) comprises: a hydrophobic structural unit obtained by modifying an alkyl ester having 1 to 6 carbon atoms of methacrylic acid; or a hydrophilic structural unit having an alkylene oxide polymer structure or a hydroxyl group; wherein the aqueous colorant dispersion is produced by the steps comprising adding, to a mixture (II) of the polymer (B) and an organic solvent (C) capable of dissolving or dispersing the polymer (B), the colorant (A) and a solution (III) that comprises a basic material and has water as a main component thereof; and removing the organic solvent (C).

Another aspect of present invention is an aqueous ink for ink jet recording, comprising the aqueous colorant dispersion.

### DETAILED DESCRIPTION

The aqueous colorant dispersion of the invention contains at least: a colorant (A); a polymer (B); and an aqueous liquid medium (I), the polymer (B) being a copolymer containing at least a hydrophilic structural unit and a hydrophobic structural unit; the hydrophobic structural unit including s at least a hydrophobic structural unit (a) having a benzene ring which is not directly bonded to an atom that forms a main chain of the polymer (B); the hydrophilic structural unit including at least a hydrophilic structural unit (b) having an ionic group; a content of the hydrophobic structural unit with respect to a total mass of the polymer (B) exceeding 80% by mass and being less than 100% by mass; the polymer (B) containing at least a structural unit (c) different from the hydrophobic structural unit (a) and the hydrophilic structural unit (b); and a content of the structural unit (c) with respect to a total mass of the polymer (B) exceeding 15% by mass and being less than 90% by mass.
The aqueous colorant dispersion has a finely dispersed colorant and is excellent in stability over time by having the above configuration.

Colorant (A) Any one of conventional dyes, pigments and the like may be used as the colorant (A) in the invention without particular limitation. Above all, a colorant that is substantially insoluble or sparingly soluble in water is preferred from the standpoint of ink coloring properties. Specific examples of the colorant include various pigments, disperse dyes, oil-soluble dyes and dyestuffs forming J aggregate. Pigments are preferable in view of resistance to light.

The pigment that may be used in the invention is not particularly limited in its kind, and any one of the conventional organic or inorganic pigments may be used. Examples of the pigment that may be used include polycyclic pigments such as azo lake, azo pigment, phthalocyanine pigment, perylene pigment, perynone pigment, anthraquinone pigment, quinacridone pigment, dioxadine pigment, diketopyrrolopyrrole pigment, thioindigo pigment, isoindoline pigment or quinophthalone pigment; dye lakes such as basic dye type lake or acidic dye type lake; organic pigments such as nitro pigment, nitroso pigment, aniline black or daylight fluorescent pigment; and inorganic pigments such as titanium oxide, iron oxide pigment or carbon black pigment. Even pigments that are not described in Color Index can be used so long as it is a pigment capable of being dispersed in an aqueous phase. Furthermore, those obtained by surface treating the above-described pigments with a surfactant, a polymeric dispersant or the like, and grafted carbon can also be used. Preferable examples of the pigments among these include organic pigments and carbon black pigments.

Specific examples of the organic pigment used in the invention are described below. Examples of the organic pigment for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 151, C.I. Pigment Yellow 155, C.I. Pigment Yellow 180 and C.I. Pigment Yellow 185.

Examples of the organic pigment for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222 and C.I. Pigment Violet 19.

Examples of the organic pigment for green or cyan include C.I. Pigment Blue 15, C.I. Pigment Blue 15:2, C.I. Pigment Blue 15:3, C.I. Pigment Blue 15:4, C.I. Pigment Blue 16, C.I. Pigment Blue 60, C.I. Pigment Green 7, and siloxane-crosslinked aluminum phthalocyanine described in US Patent 4,311,775.
Examples of the organic pigment for black include C.I. Pigment Black 1, C.I.
Pigment Black 6 and C.I. Pigment Black 7.
The colorant can be used singly or in combination of two or more thereof.

A content of the colorant in the aqueous colorant dispersion is preferably from 0.1 to 20% by mass, more preferably from 0.2 to 15% by mass, and particularly preferably from 0.5 to 10% by mass, with respect to a total solid content of the dispersion from the viewpoints of the ink coloring property and storage stability.

Polymer (B)
The polymer (B) is used as a dispersant of the colorant (A) in the aqueous liquid medium (I).
The polymer (B) is made of a hydrophobic structural unit and a hydrophilic structural unit.
While a compositional ratio of a content of the hydrophilic structural unit and that of hydrophobic structural unit in the polymer (B) varies depending on the degrees of the respective hydrophilicity and hydrophobicity, the content of the hydrophobic structural unit exceeds 80% by mass with respect to a total mass of the polymer (B). The content of the hydrophobic structural unit is preferably 85% by mass or more, and particularly preferably 90% by mass or more. The content of the hydrophilic structural unit is less than 20% by mass with respect to a total mass of the polymer (B). When the content of the hydrophilic structural unit exceeds 20%, a component which singularly dissolves in the aqueous medium (I) without contributing to the dispersing of the colorant may increase to deteriorate various performances of the colorant (A) such as the dispersibility.

Hydrophobic Structural Unit
The polymer (B) of the invention contains at least, as a hydrophobic structural unit, a hydrophobic structural unit (a) which has a benzene ring which is not directly bonded to an atom which forms a main chain of the polymer (B) (hereinafter, simply referred to also as "hydrophobic structural unit (a)").
The structure which "a benzene ring which is not directly bonded to an atom ..." herein means a structure where the benzene ring is bonded to the atom that forms the main chain structure of the polymer through a linking group. When such a configuration is imparted, an appropriate distance between the hydrophilic structural unit in the polymer (B) and a hydrophobic benzene ring can be maintained so that an interaction between the polymer (B) and the colorant (A) tends to be readily caused to result in strong adsorption to improve the dispersibility of the colorant (A).

A content of the hydrophobic structural unit (a) is preferably 30% by mass or more and less than 83% by mass, more preferably 45% by mass or more and less than 83% by mass, and particularly preferably 58% by mass or more and less than 75% by mass, with respect to a total mass of the polymer (B).

In one preferable embodiment of the invention, the benzene ring in the hydrophobic structural unit (a) is introduced in the polymer (B) in a structure shown by the following Formula (1).

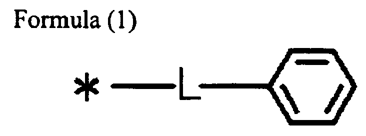

In Formula (1), the mark * represents a point linked with the main chain of the polymer (B); and L represents a divalent linking group having 1 to 30 carbon atoms. L preferably represents a divalent linking group having 1 to 25 carbon atoms, and particularly preferably represents a divalent linking group having 1 to 20 carbon atoms. The divalent linking group may be saturated or unsaturated, may have a straight chain structure, a branched chain structure or a cyclic structure, and may contain a heteroatom selected from the group consisting of O, N and S.

Among those which contain the structure represented by Formula (1), particularly preferable examples of the hydrophobic structural unit (a) include a structure represented by the following Formula (2).

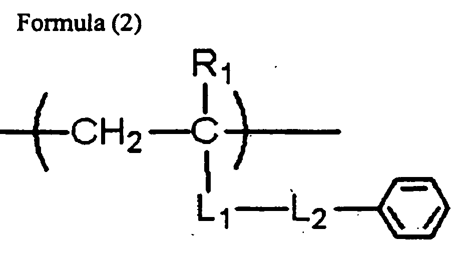

In Formula (2), R₁ represents a hydrogen atom, a methyl group or a halogen atom; L₁ represents -COO-, -OCO-, -CONH-, -O- or a substituted or unsubstituted phenylene group; and L₂ represents a single bond or a divalent linking group having 1 to 30 carbon atoms. When the L₂ is a divalent linking group, a preferable range thereof is the same as that of the L of Formula (1). Examples of a group which can substitute the phenylene group include a halogen atom, an alkyl group, an alkoxy group, a hydroxyl group and a cyano group, while the scope of the substitution group is not particularly restricted.

Preferable examples of the structural unit represented by Formula (2) include those in which R₁ is a hydrogen atom or a methyl group, L₁ is -COO-, and L₂ is a divalent linking group having 1 to 4 carbon atoms, and more preferable examples thereof include those in which R₁ is a hydrogen atom or a methyl group, L₁ is -COO-, and L₂ is a divalent linking group having one carbon atom. Examples of corresponding monomers include benzyl acrylate and benzyl methacrylate.

Hydrophilic Structural Unit The polymer (B) of the invention contains at least a hydrophilic structural unit. A content of the hydrophilic structural unit is in a range of 2% by mass to 20% by mass, preferably 2% by mass to 15% by mass , and more preferably 5% by mass to 12% by mass, with respect to a total mass of the polymer (B). More specifically, the polymer (B) contains at least a hydrophilic structural unit (b) which contains an ionic group (hereinafter, simply referred to "hydrophilic structural unit (b)").

Hydrophilic Structural Unit (b) containing Ionic Group A content of the hydrophilic structural unit (b) can be varied depending on whether a structural unit (c) described below is hydrophilic, hydrophobic, or both.
The structure of the polymer (B) in the invention is determined by the hydrophobic structural unit (a), the hydrophilic structural unit (b) and the structural unit (c), and an amount of the hydrophobic structural unit in the polymer (B) exceeds 80% by mass and in amount of the hydrophilic structural unit in the polymer (B) is 20% by mass or less with respect to a total mass of the polymer (B).
For example, when a polymer (B) is constituted exclusively of the hydrophobic structural unit (a), the hydrophilic structural unit (b) and the structural unit (c), and the structural unit (c) is hydrophilic, a content of the hydrophilic structural unit (b) that contains an ionic group can be calculated by "(total mass % of hydrophilic structural unit) - (mass % of structural unit (c))".
When the structural unit (c) is hydrophobic, a content of the hydrophilic structural unit (b) containing an ionic group can be calculated by "100 - (mass % of hydrophobic structural unit (a)) - (mass % of structural unit (c))".

The structural unit (b) containing an ionic group can be obtained by polymerizing an ionic group-containing monomer. Alternatively, it can be obtained by polymerizing a polymer that does not have an ionic group, followed by introducing an ionic group (an anionic group or a cationic group) into a chain of the polymer.
Examples of the ionic group include anionic groups such as a carboxyl group, a sulfonate group or a phosphate group; and cationic groups such as an amino group or an ammonium group. Preferable examples of the ionic group include among these include an anionic group selected from a carboxyl group, a sulfonate group and a phosphate group.
Examples of the anionic group-containing monomers and the cationic group-containing monomers that are used in the invention are shown below, while the invention is not restricted thereto.

Among the anionic group-containing monomers, examples of carboxyl group-containing monomers include unsaturated carboxylic acid monomers such as acrylic acid, methacrylic acid, crotonic acid, itaconic acid, maleic acid, fumaric acid or citoraconic acid, β-carboxyethyl acrylic acid, and 2-methacryloyloxymethyl succinic acid. Examples of sulfonate group-containing monomers include styrene sulfonic acid, 2-acrylamide-2-methylpropane sulfonic acid, 3-sulfopropyl (meth)acrylic acid ester, and bis-(3-sulfopropyl)-itaconic acid ester. Examples of phosphate group-containing monomers include vinylphosphonic acid, vinyl phosphate, bis(methacryloxyethyl)phosphate, diphenyl-2-acryloyloxyethyl phosphate, diphenyl-2-methacryloyloxyethyl phosphate, and dibutyl-2-acryloyloxyethyl phosphate.

Examples of the cationic group-containing monomers include tertiary amine-containing vinyl monomers and ammonium salt-containing vinyl monomers.
Examples of the tertiary amine-containing vinyl monomers include N,N-dimethylaminoethyl (meth)acrylate, N,N-dimethylaminopropyl (meth)acrylate, N,N-diethylaminoethyl (meth)acrylate, N,N-dimethylaminopropyl (meth)acrylamide, vinyl pyrolidone, 2-vinylpyridine, 4-vinylpyridine, 2-methyl-6-vinylpyridine and 5-ethyl-2-vinylpyridine.
Examples of the ammonium salt-containing monomers include a quaternized product of N,N-dimethylaminoethyl (meth)acrylate, a quaternized product of N,N-diethylaminoethyl (meth)acrylate and a quaternized product of N,N-dimethylaminopropyl (meth)acrylate.

Among these, anionic monomers are preferred. From the viewpoint of viscosity and dischargeability of the ink containing the dispersion of the invention, unsaturated carboxylic acid monomers are preferred. Acrylic acid and methacrylic acid are particularly preferred. The ionic group-containing monomers may be used singularly or in a combination of two or more kinds thereof.

When the polymer (B) of the invention contains an acidic group such as carboxylic acid, the acid value of the polymer (B) is preferably 10 mgKOH/g or more and less than 85 mgKOH/g, more preferably 15 mgKOH/g or more and less than 85 mgKOH/g, and particularly preferably 15 mgKOH/g or more and less than 80 mgKOH/g. The acid value herein is defined as a mass (mg) of KOH necessary to completely neutralize 1 g of the polymer (B) by the method described in JISK0070:1992.
In the case where the acid value of the polymer (B) which has an acidic group such as carboxylic acid is less than 10 mgKOH/g, the charge repulsion of a material dispersed due to dissociated carboxyl group may become insufficient, so that the dispersibility of the colorant may tend to be unfavorably deteriorated. When the acid value is 85 mgKOH/g or more, the hydrophilicity of the polymer may become higher so that the polymermay tend to be unfavorably eluted in an aqueous medium without being absorbed to the colorant.

Structural Unit (c) The polymer (B) in the invention contains at least a structural unit (c) having a structure different from the structural unit (a) and the structural unit (b) (hereinafter, simply referred to also as "structural unit (c)").
The structural unit (c) may be either a hydrophobic structural unit or a hydrophilic structural unit as long as it is a structural unit (c) having a structure different from the hydrophobic structural unit (a) and the hydrophilic structural unit.

The aqueous colorant dispersion of the invention exhibits excellent dispersibility by containing the structural unit (c) in the polymer (B). While the mechanism thereof is not clear, it is assumed as follows.
That is, the polymer (B) contains structural units of the hydrophobic structural unit (a), which shows the affinity mainly with the colorant, and the hydrophilic structural unit (b), which shows the affinity mainly with an aqueous medium. These structural units are, as it were, opposing to each other in nature. When the polymer (B) is formed only from the hydrophobic structural unit (a) and the hydrophilic structural unit (b), the hydrophobic structural unit (a) and the hydrophilic structural unit (b) disturb each other's function, which may make the dispersibility of the colorant in the dispersion insufficient. It is considered that the above-mentioned problem can be overcome and excellent dispersibility of the invention is exhibited by further containing the structural unit (c), which shows a nature which is intermediate of the hydrophobic structural unit (a) and the hydrophilic structural unit (b), in the polymer (B).

The structural unit (c) may be either a hydrophilic structural unit or a hydrophobic structural unit, while the structure of the structural unit (c) is necessarily different from those of the hydrophobic structural unit (a) and hydrophilic structural unit (b).
The content of the structural unit (c) in the polymer (B) exceeds 15% by mass and is less than 90% by mass, preferably exceeds 15% by mass and is 50% by mass or less, more preferably exceeds 15% by mass and is 40% by mass or less, and is particularly preferably 20% by mass or more and 30% by mass or less, with respect to the total amount of the polymer (B).

When the structural unit (c) is a hydrophobic structural unit, the structural unit (c) can be formed by polymerizing a monomer corresponding thereto. Alternatively, the structural unit (c) can be formed by introducing a hydrophobic functional group into a chain of a polymer after polymerization of the polymer.
When the structural unit (c) is a hydrophobic structural unit, the monomer to be polymerized for forming the the structural unit (c) is not particularly restricted and may be any known monomer as long as the monomer has a functional group capable of forming a polymer and a hydrophobic functional group.
Examples of the monomers to be polymerized forming the hydrophobic structural unit which are preferable in consideration of availability, handling property and general versatility include vinyl monomers such as (meth)acrylates, (meth)acrylamides, styrenes or vinyl esters.
Specific examples of the (meth)acrylates include alkyl (meth)acrylates such as methyl (meth)acrylate, ethyl (meth)acrylate, (iso)propyl (meth)acrylate, (iso or tert)butyl (meth)acrylate, 2-ethylhexyl (meth)acrylate, (iso)octyl (meth)acrylate, (iso)decyl (meth)acrylate or (iso)stearyl (meth)acrylate, and preferable examples among these include alkyl (meth)acrylate having 1 to 6 carbon atoms.

Specific examples of the (meth)acrylamides include N-methyl (meth)acrylamide, N-ethyl (meth)acrylamide, N-propyl (meth)acrylamide, N-isopropyl (meth)acrylamide, N-n-butyl (meth)acrylamide, N-t-butyl (meth)acrylamide, N-cyclohexyl (meth)acrylamide, N-(2-methoxyethyl) (meth)acrylamide, N,N-dimethyl (meth)acrylamide, N,N-diethyl (meth)acrylamide, vinyl (meth)acrylamide, N,N-diallyl (meth)acrylamide and N-allyl (meth)acrylamide, and preferable examples among these include (meth)acrylamide and N,N-dimethyl (meth)acrylamide.

Specific examples of the styrenes include styrene, methylstyrene, dimethylstyrene, trimethylstyrene, ethylstyrene, isopropylstyrene, n-butylstyrene, tert-butylstyrene, methoxystyrene, butoxystyrene, acetoxystyrene, chlorostyrene, dichlorostyrene, bromostyrene, chloromethylstyremne, hydroxystyrene protected by a group (such as t-Boc) deprotectable by an acidic material and methyl vinylbenzoate and α-methyl styrene, and vinylnaphthalene, and preferable examples among these include styrene and α-methylstyrene.

Examples of the vinyl esters include vinyl acetate, vinyl chloroacetate, vinyl propionate, vinyl butyrate, vinyl methoxy acetate and vinyl benzoate, and preferable examples among these include vinyl acetate.
These may be used singularly or in a mixture of two or more kinds thereof.

When the structural unit (c) is a hydrophilic structural unit, the structural unit (c) preferably contains a nonionic hydrophilic group. Further, the structural unit (c) can be formed by polymerizing a monomer corresponding thereto. Alternatively, the structural unit (c) can be formed by introducing a hydrophilic functional group into a chain of a polymer after polymerization of the polymer.
A monomer that forms the structural unit (c) is not particularly restricted and any known monomers can be used as long as the monomer has a functional group capable of forming a polymer and a nonionic hydrophilic functional group. A vinyl monomer is preferable as the monomer that forms the structural unit (c) in consideration of availability, handling property and general versatility.
Examples of the vinyl monomer include (meth)acrylates, (meth)acrylamides and vinyl esters, all of which have a hydrophilic functional group. Examples of the hydrophilic functional groups include a hydroxyl group, an amide group of which nitrogen atom is not substituted, and alkylene oxide polymers such as polyethylene oxide or polypropylene oxide described below. Among these, hydroxyethyl (meth)acrylate, hydroxybutyl (meth)acrylate, (meth)acrylamide and (meth)acrylate containing alkylene oxide polymer are particularly preferable.

One preferable embodiment of the structural unit (c) contains a hydrophilic structural unit having an alkylene oxide polymer structure.
In consideration of the hydrophilicity and hydrophobicity of the polymer (B), the alkylene of the alkylene oxide polymer preferably has 1 to 6 carbon atoms, more preferably has 2 to 6 carbon atoms, and particularly preferably has 2 to 4 carbon atoms.
The degree of polymerization of the alkylene oxide polymer is preferably 1 to 120, more preferably 1 to 60, and particularly preferably 1 to 30.

Another preferable embodiment of the structural unit (c) is a hydrophilic structural unit containing a hydroxyl group.
The number of hydroxyl groups in the structural unit (c) is not particularly restricted. In consideration of the hydrophilicity or hydrophobicity of the polymer (B) and the compatibility with a solvent or other monomers during polymerization, the number of the hydroxyl groups is preferably 1 to 4, more preferably 1 to 3 and particularly preferably 1 to 2.

The polymer (B) used in the invention may be a random copolymer where the respective structural units are introduced irregularly or a block copolymer where the respective structural units are introduced regularly. When the polymer (B) is a block copolymer, the respective structural units in the block copolymer may be synthesized in whatever introduction order, and the same kind of constituents may be used twice or more for forming the respective structural units. In consideration of the general versatility and workability, the polymer (B) in the invention is preferably a random copolymer.

A weight average molecular weight (Mw) of the polymer (B) used in the invention is preferably from 1,000 to 1,000,000, more preferably from 2,000 to 200,000, and still more preferably from 3,000 to 100,000.
The molecular weight is preferably set in the foregoing range because a stereoscopic repulsion effect as a dispersant tends to be excellent and the sticking to a colorant due to the stereoscopic effect tends to be shorter in time by satisfying the range.
A molecular weight distribution (represented in terms of the ratio of weight average molecular weight value/number average molecular weight value) of the polymer used in the invention is preferably from 1 to 6, and more preferably from 1 to 4.
The molecular weight distribution is preferably set in the foregoing range because a time length required to disperse a pigment can be shortened and the stability over time of the dispersion can be obtained.
Herein, the number average molecular weight and the weight average molecular weight are molecular weights measured by use of a GPC analyzer that uses columns of TSKgel GMHxL, TSKgel G4000HxL and TSKgel G2000HxL (trade names, manufactured by Tosoh Corporation) with a THF solvent and a differential refractive index meter, followed by converting measured values in terms of polystyrene as a reference material.

The polymer used in the invention is synthesized according to a variety kinds of polymerization methods such as a solution polymerization process, a precipitation polymerization process, a suspension polymerization process, a bulk polymerization process or an emulsion polymerization process. The polymerization reaction may be carried out according to a known operation such as a batch operation, a semicontinuous operation or a continuous operation.
Examples of a starting method of the polymerization include a method that uses a radical initiator and a method where light or radiation is illuminated. The polymerization methods and starting methods of the polymerization are described in, for example, T. Turuta "Kobunshi Gousei Houhou" revised edition (1971, Nikkan Kogyo Shinbun) and T. Ohtu and M. Kinoshita "Koubunshi Gousei no Jikkenhou", pp. 124 to 154 (1972, Kagaku Dojin).
Among the polymerization methods, a solution polymerization process that uses in particular a radical initiator is preferred. Examples of the solvents used in the solution polymerization process include various organic solvents such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methanol, ethanol, 1-propanol, 2-propanol or 1-butanol. The solvents may be used singularly, in a combination of two or more kinds thereof or as a mixture solvent of any of these and water.
A polymerization temperature is necessarily set in association with a molecular weight of a polymer to be generated and a kind of the initiator, and is usually from approximately 0 to approximately 100°C, and preferably in the range of from 50 to 100°C.
A reaction pressure is appropriately selected, and is usually from 1 to 100 kg/cm², and particularly from approximately 1 to approximately 30 kg/cm². A reaction time is from approximately 5 to approximately 30 hr. A resulting polymer may be purified by reprecipitation.

Preferable specific examples of the polymer (B) in the invention are shown below while the invention is not limited thereby. The polymers marked with "*" are not within the scope of the present invention. 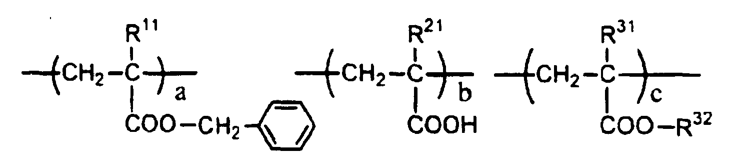 (Each of a, b and c denotes the ratio (with respect to % by mass) of each structural unit in the polymer.)

| | R¹¹ | R²¹ | R³¹ | R³² | a | b | c | Mw | Molecular weight distribution of polymer | Acid value [mgKOH/g] |
|---|---|---|---|---|---|---|---|---|---|---|
| B-1 | CH₃ | CH₃ | CH₃ | -CH₃ | 70 | 10 | 20 | 42000 | 2.31 | 65.4 |
| B-2* | H | H | H | -CH₃ | 70 | 10 | 20 | 53000 | 2.42 | 65.5 |
| B-3 | CH₃ | CH₃ | CH₃ | -CH₂CH₃ | 72 | 10 | 18 | 45000 | 2.28 | 65.2 |
| B-4 | CH₃ | CH₃ | CH₃ | -CH₂CH₂CH₂CH₃ | 62 | 8 | 30 | 56000 | 2.98 | 52.0 |
| B-5 | CH₃ | CH₃ | CH₃ | -CH(CH₃)CH₃ | 65 | 9 | 26 | 102000 | 3.15 | 58.7 |
| B-6* | H | H | H | -C(CH₃)(CH₃)CH₃ | 60 | 10 | 30 | 20500 | 2.00 | 78.2 |
| B-7 | CH₃ | CH₃ | CH₃ | -CH₂CH(CH₃)CH₃ | 70 | 5 | 25 | 81000 | 2.95 | 32.2 |
| B-8* | CH₃ | CH₃ | CH₃ | 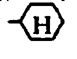 | 50 | 10 | 40 | 50000 | 2.77 | 65.4 |
| B-9 | CH₃ | CH₃ | CH₃ | -CH₂CH₂CH₂CH₂CH₂CH₃ | 74 | 10 | 16 | 49100 | 2.86 | 65.5 |
| B-10* | CH₃ | H | H | 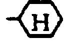 | 74 | 10 | 16 | 66200 | 3.02 | 76.0 |
| B-11 | CH₃ | CH₃ | CH₃ | -CH₂CH₂-OH | 82 | 2 | 16 | 22500 | 1.98 | 12.8 |
| B-12* | H | H | H | -CH₂CH₂-OH | 82 | 2 | 16 | 60700 | 2.64 | 15.7 |
| B-13 | CH₃ | CH₃ | CH₃ | -CH₂CH₂CH₂CH₂-OH | 81 | 3 | 16 | 60000 | 3.26 | 20.0 |
| B-14 | CH₃ | CH₃ | CH₃ | -(CH₂CH₂O)₂-H | 81 | 2 | 17 | 40800 | 2.63 | 13.5 |
| B-15 | CH₃ | CH₃ | CH₃ | -(C₃H₈O)₉-H | 81 | 3 | 16 | 45000 | 2.74 | 20.1 |
| B-16* | CH₃ | CH₃ | H | -(CH₂CH₂O)₁₀-H | 82 | 2 | 16 | 41200 | 2.56 | 13.2 |
| B-17 | CH₃ | CH₃ | CH₃ | -CH₂CH(OH)CH₃ | 81 | 3 | 16 | 48000 | 2.56 | 20.4 |
| B-18 | CH₃ | CH₃ | CH₃ | -(CH₂CH₂O)₄-CH₃ | 81 | 3 | 16 | 17200 | 1.87 | 19.9 |
| B-19* | H | H | H | -(CH₂CH₂O)₆-CH₃ | 81 | 3 | 16 | 89000 | 2.79 | 23.1 |
| B-20 | CH₃ | CH₃ | CH₃ | -(CH₂CH₂O)₂₄-CH₃ | 82 | 2 | 16 | 55000 | 2.55 | 13.0 |
| B-21* | H | H | H | -(CH₂CH₂O)₂-CH₂CH₃ | 81 | 3 | 16 | 42000 | 2.60 | 23.3 |

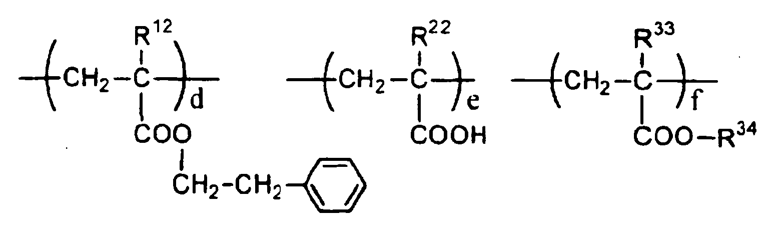

(Each of d, e and f denotes the ratio (with respect to % by mass) of each structural unit in the polymer.)

| | R¹² | R²² | R³³ | R³⁴ | d | e | f | Mw | Molecular weight distribution of polymer | Acid value [mgKOH/g] |
|---|---|---|---|---|---|---|---|---|---|---|
| B-22 | CH₃ | CH₃ | CH₃ | -CH₃ | 55 | 12 | 33 | 33000 | 2.39 | 78.0 |
| B-23* | H | H | H | -CH₂CH(CH₃)CH₃ | 70 | 10 | 20 | 22800 | 2.14 | 78.0 |
| B-24* | CH₃ | CH₃ | CH₃ | 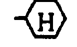 | 43 | 12 | 45 | 48000 | 2.63 | 78.2 |
| B-25 | CH₃ | CH₃ | CH₃ | -CH₂CH₂-OH | 82 | 2 | 16 | 96000 | 3.24 | 13.2 |
| B-26* | H | H | H | -(CH₂CH₂O)_{4.5}-H | 82 | 2 | 16 | 50900 | 3.10 | 15.7 |
| B-27 | CH₃ | CH₃ | CH₃ | -(CH₂CH₂O)₁₂-CH₃ | 81 | 3 | 16 | 75000 | 3.22 | 20.0 |
| B-28 | CH₃ | CH₃ | CH₃ | -(C₃H₆O)₉-H | 81 | 3 | 16 | 36900 | 2.81 | 19.6 |

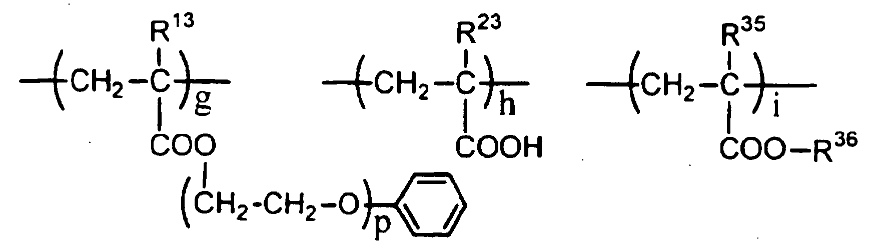

(Each of g, h and i denotes the ratio (with respect to % by mass) of each structural unit in the polymer.)

| | R¹³ | p | R²³ | R³⁵ | R³⁶ | g | h | i | Mw | Molecular weight distribution of polymer | Acid value [mgKOH/g] |
|---|---|---|---|---|---|---|---|---|---|---|---|
| B-29 | CH₃ | 1 | CH₃ | CH₃ | -CH₃ | 60 | 9 | 31 | 29500 | 2.04 | 58.8 |
| B-30* | H | 1 | H | H | -CH₂CH₃ | 70 | 10 | 20 | 45200 | 2.54 | 77.7 |
| B-31* | CH₃ | 1 | CH₃ | CH₃ | 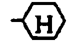 | 73 | 11 | 16 | 88000 | 3.12 | 71.5 |
| B-32* | H | 1 | H | H | -CH₂CH₂-OH | 81 | 3 | 16 | 48000 | 2.69 | 23.3 |
| B-33 | CH₃ | 1 | CH₃ | CH₃ | -(CH₂CH₂O)₈-H | 81 | 3 | 16 | 92000 | 3.10 | 19.3 |
| B-34 | CH₃ | 2 | CH₃ | CH₃ | -CH₃ | 74 | 11 | 15 | 65200 | 2.69 | 71.9 |
| B-35 | CH₃ | 2 | CH₃ | CH₃ | 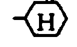 | 71 | 9 | 20 | 38000 | 2.24 | 58.4 |
| B-36 | CH₃ | 2 | CH₃ | CH₃ | -(CH₂CH₂O)₄-CH₃ | 82 | 2 | 16 | 18600 | 1.96 | 13.1 |
| B-37 | CH₃ | 2 | CH₃ | CH₃ | -(CH₂CH₂O)₂₄-CH₃ | 81 | 3 | 16 | 46000 | 2.22 | 19.6 |
| B-38* | H | 2 | H | H | -(C₃H₆O)₅-H | 81 | 3 | 16 | 93000 | 3.15 | 23.1 |
| B-39 | CH₃ | 4 | CH₃ | CH₃ | -CH₂CH₂CH₂CH₂CH₂CH₃ | 74 | 10 | 16 | 49600 | 2.22 | 64.9 |
| B-40 | CH₃ | 4 | CH₃ | CH₃ | -CH(CH₃)CH₃ | 73 | 7 | 20 | 69200 | 2.69 | 45.6 |
| B-41 | CH₃ | 4 | CH₃ | CH₃ | -(C₃H₆O)₉-H | 82 | 2 | 16 | 48600 | 2.56 | 12.7 |
| B-42 | CH₃ | 4 | CH₃ | CH₃ | -(CH₂CH₂O)₈-CH₃ | 81 | 3 | 16 | 77000 | 2.68 | 19.3 |
| B-43* | H | 5 | H | H | -CH₃ | 72 | 10 | 18 | 106000 | 3.52 | 78.0 |
| B-44* | H | 5 | H | H | -CH₂CH(CH₃)CH₃ | 82 | 2 | 16 | 32200 | 2.15 | 15.8 |
| B-45* | H | 5 | H | H | -(CH₂CH₂O)₁₀-H | 81 | 3 | 16 | 46900 | 2.67 | 23.3 |
| B-46* | H | 5 | H | H | -(CH₂CH₂O)₉-CH₃ | 81 | 3 | 16 | 44000 | 2.73 | 23.2 |
| B-47* | H | 5 | H | H | -(C₃H₆O)₆-H | 81 | 3 | 16 | 40000 | 2.75 | 23.8 |
| B-48* | H | 5 | H | H | -C₃H₆O-(C₄H₉O)₆-H | 81 | 3 | 16 | 41000 | 2.83 | 23.5 |

B-49 (Mw: 16000, Molecular weight distribution: 2.68, Acid value: 65.4 mgKOH/g)

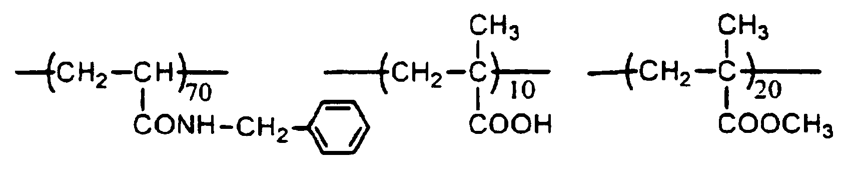

B-50 (Mw: 86000, Molecular weight distribution: 3.89, Acid value: 65.2 mgKOH/g)

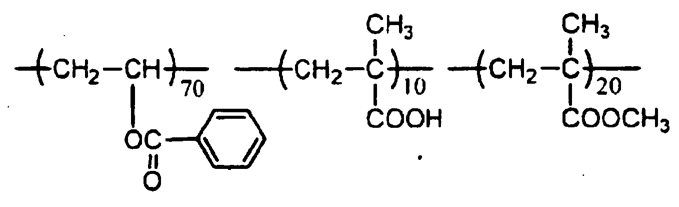

B-51 (Mw: 63000, Molecular weight distribution: 2.75, Acid value: 65.4 mgKOH/g)

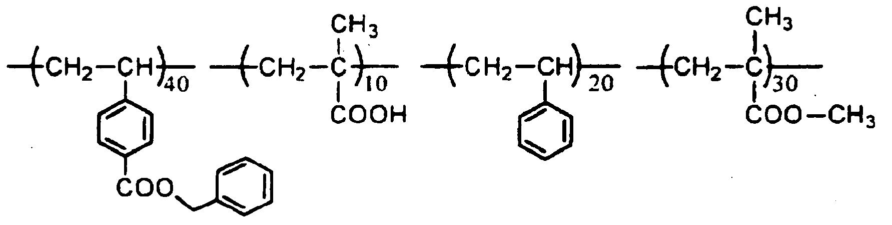

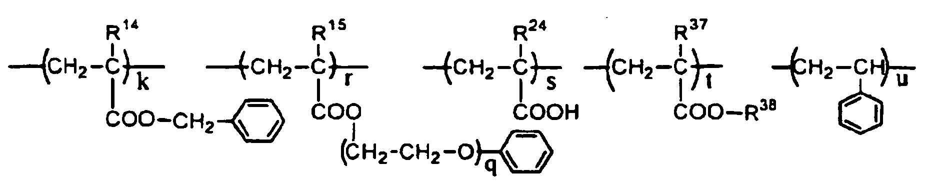

### (Each of k, r, s, t, and u denotes the ratio (with respect to % by mass) of each structural unit in the polymer.)

| | R¹⁴ | R¹⁵ | q | R²⁴ | R³⁷ | R³⁸ | k | r | s | t | u | Mw | Molecular weight distribution of polymer | Acid value [mgKOH/g] |
|---|---|---|---|---|---|---|---|---|---|---|---|---|---|---|
| B-52* | CH₃ | - | - | CH₃ | - | - | 50 | 0 | 10 | 0 | 40 | 47200 | 2.86 | 65.0 |
| B-53* | H | - | - | H | - | - | 60 | 0 | 8 | 0 | 32 | 50000 | 2.89 | 62.3 |
| B-54 | CH₃ | - | - | CH₃ | CH₃ | -CH₃ | 30 | 0 | 10 | 20 | 40 | 48600 | 2.89 | 65.5 |
| B-55 | CH₃ | - | - | CH₃ | CH₃ | -CH₂CH₂CH₂CH₃ | 70 | 0 | 5 | 7 | 18 | 41000 | 2.75 | 32.2 |
| B-56* | CH₃ | - | - | CH₃ | CH₃ | 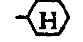 | 65 | 0 | 5 | 15 | 15 | 25000 | 2.01 | 32.5 |
| B-57 | CH₃ | - | - | CH₃ | CH₃ | -CH₂CH₂-OH | 72 | 0 | 8 | 5 | 15 | 65800 | 2.96 | 52.4 |
| B-58 | CH₃ | - | - | CH₃ | CH₃ | -(CH₂CH₂O)₂-H | 65 | 0 | 5 | 10 | 20 | 32500 | 2.23 | 32.8 |
| B-59 | CH₃ | - | - | CH₃ | CH₃ | -(CH₂CH₂O)₁₄-CH₃ | 65 | 0 | 10 | 5 | 20 | 36000 | 2.24 | 65.2 |
| B-60* | H | H | 1 | H | H | -CH₃ | 22 | 50 | 8 | 20 | 0 | 49600 | 2.68 | 62.3 |
| B-61 | CH₃ | CH₃ | 1 | CH₃ | CH₃ | -CH₂CH₂-OH | 44 | 37 | 3 | 16 | 0 | 51000 | 3.00 | 19.3 |
| B-62 | CH₃ | CH₃ | 1 | CH₃ | CH₃ | -(CH₂CH₂O)₄-CH₃ | 31 | 50 | 3 | 16 | 0 | 25000 | 2.25 | 19.1 |
| B-63* | H | H | 5 | H | H | -CH(CH₃)CH₃ | 35 | 35 | 12 | 18 | 0 | 96300 | 3.65 | 76.5 |
| B-64* | H | H | 5 | H | H | -(C₅H₆O)₁₃-H | 68 | 13 | 2 | 17 | 0 | 42000 | 2.59 | 15.4 |
| B-65* | H | H | 5 | H | H | 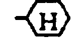 | 40 | 25 | 10 | 25 | 0 | 17800 | 2.21 | 76.2 |
| B-66* | H | H | 1 | H | H | -CH₃ | 46 | 20 | 9 | 10 | 15 | 69000 | 3.01 | 69.8 |
| B-67 | CH₃ | CH₃ | 1 | CH₃ | CH₃ | -CH₂CH₂-OH | 46 | 10 | 9 | 5 | 30 | 56000 | 2.29 | 58.4 |
| B-68 | CH₃ | CH₃ | 1 | CH₃ | CH₃ | -(CH₂CH₂O)₉-CH₃ | 45 | 15 | 10 | 5 | 25 | 56200 | 2.79 | 65.5 |
| B-69 | CH₃ | CH₃ | 1 | CH₃ | CH₃ | -CHCH₃ | 20 | 45 | 13 | 17 | 5 | 44000 | 2.85 | 84.6 |
| B-70* | H | H | 5 | H | H | -(C₃H₆O)₅-H | 15 | 47 | 12 | 6 | 20 | 85300 | 2.99 | 78.6 |
| B-71* | H | H | 5 | H | H | 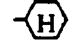 | 30 | 29 | 11 | 20 | 10 | 36000 | 2.12 | 85.4 |

Water-soluble solvent The water-soluble organic solvent used in the aqueous colorant dispersion of the invention contains water as a solvent, and can further contain a water-soluble organic solvent. The water-soluble organic solvent can be contained as a drying inhibitor or a permeation accelerator. Where the aqueous ink composition containing the aqueous colorant dispersion of the invention is particularly applied to an image recording method by an inkjet method, the drying inhibitor can effectively prevent clogging of nozzle that may possibly be generated by drying of the ink composition at an ink jet orifice.

The drying inhibitor is preferably a water-soluble organic solvent having vapor pressure lower than that of water. Specific examples of the drying inhibitor include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol compounds, glycerin or trimethylolpropane; lower alkyl ethers of polyhydric alcohol, such as ethylene glycol monomethyl (or ethyl) ether, diethylene glycol monomethyl (or ethyl) ether or triethylene glycol monoethyl (or butyl) ether; heterocycles such as 2-pyrrolidone, N-methyl-2-pyrrolidone, 1,3-dimethyl-2-imidazolidinone or N-ethylmorpholine; sulfur-containing compounds such as sulfolane, dimethylsufoxide or 3-sulforene; polyfunctional compounds such as diacetone alcohol or diethanolamine; and urea compounds. Among the above, polyhydric alcohols such as glycerin or diethylene glycol are preferred as the drying inhibitor. Those drying inhibitors may be used alone or as mixtures of two kinds or more thereof. Those drying inhibitors are preferably contained in an amount of from 10 to 50% by mass in the ink.

The permeation accelerator is preferably used for the purpose of well permeating the ink into a recording medium (printing paper). Specific examples of the permeation accelerator include alcohols such as ethanol, isopropanol, butanol, di(tri)ethylene glycol monobutyl ether or 1,2-hexanediol; sodium lauryl sulafate, sodium oleate, and nonionic surfactants. When the permeation accelerator is contained in the ink composition in an amount of from 5 to 30% by mass, sufficient effect can be exhibited. An addition amount of the permeation accelerator is preferably within a range in which bleeding of printing and print-through are not generated.

In addition to the above objects, the water-soluble organic solvent can be used to adjust viscosity. Specific examples of the water-soluble organic solvent that can be used to adjust viscosity include alcohols (for example, methanol, ethanol, propanol, isopropanol, butanol, isobutanol, sec-butanol, t-butanol, pentanol, hexanol, cyclohexanol and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol), glycol compounds (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether and ethylene glycol monophenyl ether), amines (for example, ethanolamine, diethanolamine, triethanolamine, N-methyl diethanolamine, N-ethyl diethanolamine, morpholine, N-ethylmorpholine, ethylene diamine, diethylene triamine, triethylene tetramine, polyethylene imine and tetramethylpropylene diamine), and other polar solvents (for example, formaldehyde, N,N-dimethylformamide, N,N-dimethylacetamide, diemthylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone).
The water-soluble organic solvent may be used alone or as mixtures of two kinds or more thereof.

A content of the aqueous liquid medium in the aqueous colorant dispersion of the invention is preferably from 1 to 70% by mass, more preferably from 2 to 60% by mass, and particularly preferably from 5 to 50% by mass, from the viewpoints of improving the liquid physical properties such as preventing drying, the permeability to an adherend and the viscosity.
When the content of the aqueous liquid medium is set in the range, the liquid physical properties such as the drying speed of the colorant dispersion, the permeability to the adherend and the viscosity may be controlled into appropriate conditions.

Other Additive Additives other than the indispensable components described above may also be added to the aqueous colorant dispersion of the invention as needs arise. Examples of such other additives include additives that may be used in known pigment dispersions and/or aqueous inks.

Examples of other additives used in the invention include conventional additives such as color fading inhibitor, emulsion stabilizer, permeation accelerator, ultraviolet absorber, preservative, mildew-proofing agent, pH regulator, surface tension regulator, defoamer, viscosity regulator, dispersant, dispersion stabilizer, anti-rust agent and chelating agent. Those various additives may directly be added after preparation of the aqueous colorant dispersion, or may be added at the time of preparation of the aqueous colorant dispersion.

The ultraviolet absorber is used for the purpose of improving preservability of an image formed by using the aqueous colorant dispersion. The ultraviolet absorber can use benzotriazole compounds described in, for example, JP-A Nos. 58-185677, 61-190537, 2-782, 5-197075 and 9-34057; benzophenone compounds described in, for example, JP-A Nos. 46-2784 and 5-194483, and US Patent No. 3,214,463; cinnamic acid compounds described in, for example, JP-B Nos. 48-30492 and 56-21141, and JP-A No. 10-88106; triazine compounds described in, for example, JP-ANos. 4-298503, 8-53427, 8-239368 and 10-182621, and JP-A No. 8-501291; compounds described in Research Disclosure No. 24239; and compounds that absorb ultraviolet light and emit fluorescence, i.e., fluorescent brighteners, represented by stilbene compounds or benzoxazole compounds.

The color fading inhibitor is used for the purpose of improving storability of an image formed by using the aqueous colorant dispersion. Examples of the color fading inhibitor that can be used include various organic color fading inhibitors and metal complex color fading inhibitors. Examples of the organic color fading inhibitor include hydroquinones, alkoxyphenols, dialkoxyphenols, phenols, anilines, amines, indanes, chromanes, alkoxyanilines and heterocycles. Examples of the metal complex color fading inhibitor include a nickel complex and a zinc complex. More specifically, compounds described in the patents cited in Research Disclosure No. 17643, chapter VII, items I to J; Research Disclosure No. 15162: Research Disclosure No. 18716, page 650, the left-hand column; Research Disclosure No. 36544, page 527; Research Disclosure No. 307105, page 872; and Research Disclosure No. 15162, and compounds included in the formulae of the representative compounds and the exemplified compounds described on pages 127 to 137 of JP-A No. 62-215272 can be used.

Examples of the mildew-proofing agent include sodium dehydroacetate, sodium benzoate, sodium pyridinethion-1-oxide, p-hydroxybenzoic acid ethyl ester, 1,2-benzisothiazolin-3-one and its salt. Those are preferably used in the aqueous colorant dispersion in an amount of from 0.02 to 1.00% by mass.
As the pH regulator, a basic material (a neutralizer such as an organic base and an inorganic alkali) may be used. The basic material may be added in an amount such that the aqueous colorant dispersion has a pH of preferably from 6 to 10, and more preferably from 7 to 10, so as to improve storage stability of the aqueous colorant dispersion.

Examples of the basic material include: inorganic alkali agents such as alkali metal hydroxide such as sodium hydroxide or potassium hydroxide; and organic amines such as diethanolamine or triethanolamine. As needs arise, an organic acid such as citric acid or tartaric acid or a mineral acid such as hydrochloric acid or phosphoric acid may be used. Among these, from the viewpoint of ease of use, an inorganic alkali agent such as alkali metal hydroxide such as sodium hydroxide or potassium hydroxide is preferred.

Examples of the surface tension regulator include nonionic surfactants, cationic surfactants, anionic surfactants and betaine surfactants.
The surface tension regulator is added in an amount such that the surface tension of the aqueous colorant dispersion is adjusted to preferably from 20 to 60 mN/m, more preferably from 20 to 45 mN/m, and further preferably from 25 to 40 mN/m, in order to well eject the aqueous colorant dispersion as it is by an inkjet method.
The surface tension of the aqueous ink composition can be measured using, for example, the Wilhelmy method.

Preferable specific examples of a hydrocarbon surfactant as the surfactant include: anionic surfactants such as fatty acid salts, alkyl sulfate ester salts, alkyl benzene sulfonates, alkyl naphthalene sulfonates, dialkyl sulfosuccinates, alkyl phosphate ester salts, naphthalenesulfonic acid-formalin condensates or polyoxyethylene alkyl sulfate ester salts; and nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkyl amine, glycerin fatty acid ester or oxyethylene oxypropylene block copolymer. SURFYNOLS (trade name, products of Air Products & Chemicals) which are an acetylenic polyoxyethylene oxide surfactant are preferably used. Further, amine oxide amphoteric surfactants such as N,N-dimethyl-N-alkyl amine oxide are preferred.
Additionally, materials described on pages (37) to (38) of JP-A No. 59-157636 and Research Disclosure No. 308119 (1989) as surfactants can be used.
When fluorine (alkyl fluoride) surfactants, silicone surfactants and the like, such as those described in JP-A Nos. 2003-322926, 2004-325707 and 2004-309806 are used, scratch fastness can be improved.
The surface tension regulator can be used as a defoamer, and fluorine compounds, silicone compounds, chelating agents represented by EDTA, and the like can be used.

When the ink is applied by an inkjet method, a viscosity of the aqueous colorant dispersion of the invention is preferably in a range of from 1 to 30 mPa·s, more preferably in a range of from 1 to 20 mPa·s, and further preferably in a range of from 2.5 to 15 mPa·s, from the standpoints of droplet ejection stability and aggregation speed. The viscosity herein referred is a value measured at 25 °C.
The viscosity of the aqueous colorant dispersion can be measured using, for example, a E-type viscometer.

Method of Producing Aqueous colorant dispersion The method of producing the aqueous colorant dispersion of the invention includes at least: adding, to a mixture (II) of the polymer (B) and an organic solvent (C) capable of dissolving or dispersing the polymer (B), the colorant (A) and a solution (III) that contains at least a basic material and has water as a main component thereof (mixing-hydrating process); and removing the organic solvent (C) (solvent-removing process).
This producing method provides the aqueous colorant dispersion of the invention that has a finely dispersed colorant and is excellent in stability over time.

The organic solvent (C) in the invention is necessary to capable of dissolving or dispersing the polymer (B) in the invention and, in addition thereto, preferably has certain extent of compatibility to water. Specifically, the solubility thereof to water at 20°C is preferably in the range of from 10% by mass to 50% by mass.

More specifically, the aqueous colorant dispersion of the invention can be produced according to a producing method including the following (1) and (2), while the invention is not limited thereto.
(1): Dispersing a mixture containing a colorant (A), a polymer (B), an organic solvent (C) that dissolves or disperses the polymer (B), a solution (III) containing a basic material and mainly made of water and water (2): Removing the organic solvent (C) In the dispersing (1), the polymer (B) is firstly dissolved or dispersed in an organic solvent (C) to obtain a mixture (II) (mixing). Then, a colorant (A), a solution (III) that contains a basic material and is mainly made of water, water, and, as needs arise, a surfactant and the like are added to the mixture (II), followed by mixing and dispersing to provide an oil-in- water type aqueous colorant dispersion.
A neutralization degree of the aqueous colorant dispersion is not particularly restricted. Usually, the liquid property of a finally resulting aqueous colorant dispersion is preferably neutral such as being 4.5 to 10 in the pH. The pH may be determined depending on a desired neutralization degree of the water-insoluble vinyl polymer.

The colorant (A), the polymer (B) and other additives, which are used in the producing method of the aqueous colorant dispersion, are the same as those explained for the aqueous colorant dispersion, and preferable examples thereof as well are the same.

Preferable examples of the organic solvent (C) used in the invention include alcohol solvents, ketone solvents and ether solvents. Among these, examples of alcohol solvents include ethanol, isopropanol, n-butanol, tert-butanol, isobutanol and diacetone alcohol. Examples of ketone solvents include acetone, methyl ethyl ketone, diethyl ketone and methyl isobutyl ketone. Examples of ether solvents include dibutyl ether, tetrahydrofuran and dioxane. Among the solvents, isopropanol, acetone and methyl ethyl ketone are preferred, and methyl ethyl ketone is particularly preferred.
The organic solvents (C) may be used singularly or in a combination of two or more kinds thereof.

In the production of the aqueous colorant dispersion, kneading and dispersing can be carried out under strong shearing force by use of a two-roller mill, a three-roller mill, a ball mill, a toron mill, a disperser, a kneader, a co-kneader, a homogenizer, a blender or a uniaxial or biaxial extruder.
Details of the kneading and dispersing are described in T.C. Patton, "Paint Flow and Pigment Dispersion" (1964, John Wiley and Sons).
Further, as needs arise, kneading and dispersing can be carried out by use of a vertical or horizontal sand grinder, pin mill, slit mill or an ultrasonic disperser, with glass or zirconia beads having a particle diameter of 0.01 to 1 mm.

In the producing method of the aqueous colorant dispersion of the invention, there is no particular restriction to the (2) removal of the organic solvent. Any known method such as reduced-pressure distillation may be used to the removing.

An average particle diameter of the colorant obtained according to the producing method of the aqueous colorant dispersion of the invention is preferably 10 nm or more and less than 200 nm, more preferably 50 nm or more and less than 130 nm, and still more preferably 60 nm or more and less than 100 nm. When the average particle diameter is set in such range, the coloring developing property, dispersion stability and discharge stability at the time of jetting may be made excellent.
The average particle diameter of dispersed particles of the colorant is calculated from a value obtained by measurement using a dynamic light scattering method.

The aqueous colorant dispersion of the invention can be used in, for example, an aqueous ink for inkjet recording, which will be described below, and an aqueous ink for writing utensils such as aqueous ball-point pens or marker pens. In this case, in order to prevent an inkjet nozzle or a pen tip from clogging due to drying, a low volatile or non-volatile solvent which can be selected from the aforementioned aqueous organic solvents may be added to the aqueous colorant dispersion. Further, in order to improve the permeability of the aqueous colorant dispersion-containing composition to a recording medium, a volatile solvent may be added to the aqueous colorant dispersion.

Aqueous Ink for Inkjet Recording The aqueous ink for inkjet recording of the invention (hereinafter, appropriately referred to as "aqueous ink") contains the aqueous colorant dispersion of the invention.
The aqueous ink for inkjet recording of the invention can be prepared by providing the aqueous colorant dispersion of the invention as it is or by diluting the aqueous colorant dispersion of the invention with the aqueous liquid medium (I) after adding the drying inhibitor and the other additives to the aqueous colorant dispersion.

An amount of the colorant contained in the aqueous ink is preferably in the range of 0.1 to 20% by mass and more preferably in the range of 0.5 to 10% by mass from the viewpoint of the coloring properties, storage stability and dischargeability of the ink.

An amount of the polymer (B) contained in the aqueous ink is preferably in the range of 1 to 150% by mass, and more preferably in the range of 5 to 100% by mass relative to an amount of the pigment (colorant) from the viewpoints of the dispersibility, storage stability and dischargeability of the aqueous ink.

The pH of the aqueous ink is preferably in the range of 7 to 10. When the pH is set in the range, the storage stability of the aqueous ink is improved, and corrosion of members of an inkjet recording device to which the aqueous ink is applied can be prevented.
The pH of the aqueous ink can be controlled with a basic material described for the aqueous colorant dispersion.

In order to prevent clogging of an inkjet nozzle due to drying a low-volatile or non-volatile solvent which can be selected from the aforementioned aqueous organic solvents may be added to the aqueous ink of the invention. Further, in order to improve the permeability of the aqueous ink to a recording medium, a volatile solvent may be added to the aqueous ink. In order to impart adequate surface tension, it is also preferable to add a surfactant to the aqueous ink of the invention.

### EXAMPLES

The invention will be described more specifically with reference to the following examples, while the scope of the invention is not restricted thereby.

Synthesis example 1 (Synthesis of B-59) A following scheme was adopted to synthesize a polymer B-59.

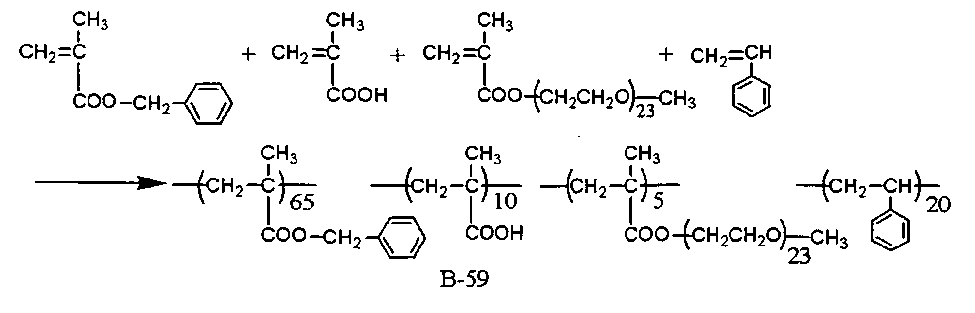

Into a 1000 ml three-neck flask provided with an agitator and a cooling pipe, 90 g of methyl ethyl ketone was added, followed by heating at 72°C under a nitrogen atmosphere, thereto a solution obtained by dissolving 0.80 g of 2,2'-azobisisobutyrate, 65 g of benzyl methacrylate, 10 g of methacrylic acid, 5g of methoxy polyethylene glycol monomethacrylate (trade name: BLEMMER PME-1000, manufactured by Nippon Oil & Fat Co., Ltd.) and 20g of styrene in 50 g of methyl ethyl ketone was dropped over 3 hr. After reacting further for 1 hr after dropping came to an end, a solution obtained by dissolving 0.8g of dimethyl 2,2'-azobisisobutyrate in 10g of methyl ethyl ketone was added thereto, followed by heating to 78°C and heating there for 4 hr. A resulting reaction solution was re-precipitated twice in a large excess amount of hexane, a precipitated polymer was dried, so as to obtain 96 g of B-59.
The formulation of the resulting polymer was confirmed by ¹H-NMR, and a weight average molecular weight (Mw) of the resulting polymer obtained from GPC was 36,000. Further, the acid value of the polymer was measured according to a method described in JIS Standard (JISK0070:1992) to find it as 65.2 mgKOH/g.

Other polymers which can be used in the invention can be synthesized similarly.

Example 1: Preparation of Pigment Dispersion (D-1) By use of a FRITCH PLANETARY BALL MILL MODEL P-7 (trade name, manufactured by Fritch Co., Ltd.), a pigment dispersion was prepared according to a following procedure.
The B-59 obtained according to synthesis example 1 was prepared into a methyl ethyl ketone solution having a solid content of 40% by mass. Into a 45 ml zirconia vessel, 1.0 g of PB 15:3 pigment powder (trade name: PHTHALOCYANINE BLUE A220, manufactured by Dainichiseika Color & Chemicals Mfg. Co., Ltd.), 1.25 g of the prepared methyl ethyl ketone solution of B-59, 3.75 g of methyl ethyl ketone and 581 µL of 1N NaOH aqueous solution (1 equivalent to an amount of carboxylic acid contained in the dispersant) were added, followed by further adding ultrapure water so that a sum total of masses charged into the vessel may be 15 g, further followed by adding 40 g of zirconia beads having a diameter of 0.1 mm (trade name: TORAYCERAM BEADS, manufactured by Toray Industries, Inc.), still further followed by lightly mixing by use of a spatula.

The 45 ml zirconia vessel was put in an overpot type special atmosphere control vessel, followed by substituting with nitrogen, further followed by dispersing at the number of revolutions of 300 rpm for 3 hr. After dispersion came to an end, filter cloth was used to remove beads and thereby a pigment dispersion was obtained.

Furthermore, the pigment dispersion was distilled under reduced pressure to remove methyl ethyl ketone, followed by separating by centrifugation at 5000 rpm for 30 min by use of a centrifugal separator (trade name: 05P-21, manufactured by Hitachi Ltd.), further followed by preparing a pigment dispersion by adding ion exchange water so that a pigment concentration may be 15% by mass. Then, by use of a 2.5 µm membrane filter (manufactured by Advantec), pressure filtration was applied, ion exchange water was added so that a pigment concentration may be 4% by mass, and, thereby, a pigment dispersion (D-1) of the invention was obtained.

Example 2: Preparation of Pigment Dispersions (D-2) to (D-10) Pigment dispersions (D-2), (D-3), (D-4), (D-5), (D-6) and (D-7) of the invention were prepared in the similar manner as the preparation of the pigment dispersion (D-1) of Example 1, except that B-1, B-20, B-24, B-30, B-54 and B-70 were respectively used in place of B-59.
Further, pigment dispersions (D-8), (D-9) and (D-10) were prepared in the similar manner as the preparation of the pigment dispersion (D-1) of Example 1, except that C.I. Pigment Red 122 (trade name: CROMOPHTAL Jet Magenta DMQ, manufactured by Ciba Specialty Chemicals Co., Ltd.), C.I. Pigment Yellow 74 (manufactured by Ciba Specialty Chemicals Co., Ltd.) and carbon black (trade name: NIPEX 160-IQ, manufactured by DEGUSSA) were respectively used in place of the PHTHALOCYANINE BLUE A220 (described above).

Example 3: Preparation of Aqueous Ink for Inkjet Recording
A pigment dispersion-containing composition having a following formulation was prepared by using the above-obtained pigment dispersion (D-1), and centrifugal separation was applied to the composition for 30 min to 2 hr at 10,000 rpm to 20,000 rpm so as to obtain an aqueous ink for inkjet recording (J-1).

| | |
|---|---|
| Pigment dispersion (D-1) | 40 parts by mass |
| Glycerin | 7 parts by mass |
| Diethylene glycol | 9 parts by mass |
| Triethanolamine | 1 parts by mass |
| Surfactant | |
| (trade name: OLFIN E1010, manufactured by Nisshin Chemicals Co., Ltd.) | |
| | 1 parts by mass |
| Triethylene glycol monobutyl ether | 9 parts by mass |
| Ion exchange water | 34 parts by mass |

The pH of the ink was measured by use of a pH-meter WM-50EG (trade name, manufactured by Toa DKK Co., Ltd.) and found to be 8.5.
Aqueous inks for inkjet recording (J-2) to (J-10) were prepared in the similar manner as the aqueous ink for inkjet recording (J-1) except that the pigment dispersions (D-2) to (D-10) were respectively used in place of the (D-1).

Comparative Example 1: Preparation of Pigment Dispersions (D-11) and (D-12)
Pigment dispersions (D-11) and (D-12) were prepared in the similar manner as the pigment dispersion (D-1) of Example 1, except that a copolymer P-30 of a synthesis example 1 described in [0065] in JP-A 2007-51199 and a copolymer S 10-80 of a synthesis example 8 described in [0071] of the same publication were respectively used in place of the B-59.

Comparative Example 2: Preparation of Aqueous Ink for Inkjet Recording
Aqueous inks for inkjet recording (J-11) and (J-12) were prepared in the similar manner as the aqueous ink for inkjet recording (J-1) of Example 3, except that the pigment dispersions (D-11) and (D-12) were respectively used in place of the (D-1).

Evaluation of Pigment Dispersion (1) Measurement of Average particle diameter
A volume average particle diameter of each of resulting pigment dispersions was measured according to a dynamic light scattering method by use of a nanotrack particle size analyzer UPA-EX150 (trade name, manufactured by Nikkiso Co., Ltd.). Results thereof are shown in Table 1.
Measurement conditions: 10 ml of ion exchange water was added to 10 µl of the dispersion to prepare a measurement solution, and measurement was performed at 25°C.
Evaluation criteria are as follows.
A: An average particle diameter was 70 nm or more and less than 100 nm.
B: An average particle diameter was 100 nm or more and less than 130 nm.
C: An average particle diameter was 130 nm or more and less than 200 nm.
X: An average diameter was 200 nm or more.

2. Stability of Pigment dispersion over time
After the resulted pigment dispersions were left at 60°C for 14 days in a sealed state, an average particle diameter and a viscosity were measured for each of the pigment dispersions to evaluate flocculation and thickening of the pigment particles based on the following evaluation criteria. A: Chainges of average particle diameter and viscosity of the pigment particles were not at all observed. B: Chainges of average particle diameter and viscosity of the pigment particles were not observed. C: Chainges of average particle diameter and viscosity of the pigment particles were slightly observed at a practically non-problematic level. X: Chainges of average particle diameter and viscosity of the pigment particles were observed at a practically problematic level.
An average particle diameter was measured similarly to the above (1) and the viscosity was measured according to the following procedure. (2) Measurement of Viscosity
The viscosity of each of the resulting pigment dispersions was measured by use of a TV-22 VISCOMETER (trade name, manufactured by Toki Sangyo K. K.) at 25°C.

Evaluation of Ink for Inkjet Recording 1. Evaluation of Coloring Density (Printing Density) of Printed Matter
Each of the inks for inkjet recording (J-1) to (J-12) was filled in a commercially-available inkjet recording printer PX-G930 (trade name, manufactured by Seiko Epson Corporation), and printing was performed.
The droplet hitting was excellent in all of the inks for inkjet recording of the invention. However, the droplet hitting property of comparative inks for inkjet recording (J-11) and (J-12) was defective. Results are shown in Table 2.

2. Measurement of Average Particle Diameter
According to a process similar to that of the measurement of the average particle diameter of the pigment dispersion, an average particle diameter of each of the resulting inks for inkjet recording was measured. Results thereof are shown in Table 2.
A: An average particle diameter was 70 nm or more and less than 100 nm.
B: An average particle diameter was 100 nm or more and less than 130 nm.
C: An average particle diameter was 130 nm or more and less than 200 nm.
X: An average particle diameter was 200 nm or more.

3. Stability over time After resulting inks for inkjet recording were left in a closed state at 60°C for 14 days, flocculation and thickening of the pigment particles were observed by measuring an average particle diameter and the viscosity, followed by evaluating based on evaluation criteria below. A: Variations of average particle diameter and viscosity of the pigment particles were not at all observed. B: Variations of average particle diameter and viscosity of the pigment particles were not observed. C: Variations of average particle diameter and viscosity of the pigment particles were slightly observed at a practically non-problematic level. X: Variations of average particle diameter and viscosity of the pigment particles were observed at a problematic level.
An average particle diameter was measured according to a method described in the 1 and the viscosity was measured according to a method of the 2.

### Evaluation of Inkjet Droplet Hitting Property

The droplet hitting stability was evaluated by visually observing a state of droplet hitting. Results thereof are shown in Table 2. Evaluation was carried out based on the following criteria.
A: Discharge defect was not found.
B: Discharge defect was hardly observed at a practically non-problematic level.
C: Discharge defect was observed at a practically problematic level.
D: Discharge defect was much.

**Table 1**

| Pigment Dispersion | Polymer | Polymer Acid Value (mgKOH/g) | Colorant (Pigment) | Average Particle Diameter | Stability over time | Remarks |
|---|---|---|---|---|---|---|
| D-1 | B-59 | 65.2 | A220 | B | B | The invention |
| D-2 | B-1 | 65.4 | A220 | B | B | The invention |
| D-3 | B-20 | 13.0 | A220 | B | B | The invention |
| D-4 | B-24 | 78.2 | A220 | A | B | reference example |
| D-5 | B-30 | 77.7 | A220 | A | B | reference example |
| D-6 | B-54 | 65.5 | A220 | B | B | The invention |
| D-7 | B-70 | 78.6 | A220 | A | B | reference example |
| D-8 | B-59 | 65.2 | PR122 | B | B | The invention |
| D-9 | B-59 | 65.2 | PY74 | B | B | The invention |
| D-10 | B-59 | 65.2 | Carbon black | B | B | The invention |
| D-11 | P-30 | 29.7 | A220 | C | C | Comparative Example |
| D-12 | S10-80 | 79.8 | A220 | C | C | Comparative Example |

### Table 2

**Table 2**

| Aqueous Ink | Pigment Dispersion | Average Particle Diameter | Stability over time | Droplet Hitting Property | Remarks |
|---|---|---|---|---|---|
| J-1 | D-1 | B | B | B | The invention |
| J-2 | D-2 | B | B | B | The invention |
| J-3 | D-3 | B | B | B | The invention |
| J-4 | D-4 | A | B | B | * |
| J-5 | D-5 | A | B | B | * |
| J-6 | D-6 | B | B | B | The invention |
| J-7 | D-7 | A | B | B | * |
| J-8 | D-8 | B | B | B | The invention |
| J-9 | D-9 | B | B | B | The invention |
| J-10 | D-10 | B | B | B | The invention |
| J-11 | D-11 | C | C | C | Comparative Example |
| J-12 | D-12 | C | C | C | Comparative Example |

| | | | | | |
|---|---|---|---|---|---|
| * reference example | | | | | |

As is obvious from Tables 1 and 2, the pigments in the pigment dispersions (aqueous colorant dispersions) of the invention had fine dispersion particle diameter, and the pigment dispersions of the invention were excellent in the stability over time, while the comparative pigment dispersions were poorer in all of the evaluation items.
It was further found that the aqueous inks of the invention were excellent in all of the average particle diameter, stability over time and droplet hitting stability, while the aqueous inks of the comparative examples are poorer in all of the evaluation items.

## Claims

1. An aqueous colorant dispersion comprising:
a colorant (A);
a polymer (B); and
an aqueous liquid medium (I),
the polymer (B) being a copolymer comprising a hydrophilic structural unit and a hydrophobic structural unit;
the hydrophobic structural unit comprising a hydrophobic structural unit (a) comprising a benzene ring which is not directly bonded to an atom that forms a main chain of the polymer (B);
the hydrophilic structural unit comprising a hydrophilic structural unit (b) comprising an ionic group;
a content of the hydrophobic structural unit with respect to a total mass of the polymer (B) exceeding 80% by mass and being less than 100% by mass;
the polymer (B) comprising a structural unit (c) different from the hydrophobic structural unit (a) and the hydrophilic structural unit (b); and
wherein a content of the structural unit (c) with respect to a total mass of the polymer (B) exceeding 15% by mass and being less than 90% by mass and the structural unit (c) comprises:
a hydrophobic structural unit obtained by modifying an alkyl ester having 1 to 6 carbon atoms of methacrylic acid; or
a hydrophilic structural unit having an alkylene oxide polymer structure or a hydroxyl group;
wherein the aqueous colorant dispersion is produced by the steps comprising adding, to a mixture (II) of the polymer (B) and an organic solvent (C) capable of dissolving or dispersing the Polymer (B), the colorant (A) and a solution (III) that comprises a basic material and has water as a main component thereof; and removing the organic solvent (C).

2. The aqueous colorant dispersion of claim 1, wherein the hydrophobic structural unit (a) has a structure represented by the following Formula (1): Formula (1) 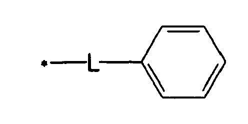 wherein * represents a point linked with the main chain of the polymer (B); and L represents a divalent linking group having 1 to 30 carbon atoms, the divalent linking group may be saturated or unsaturated, may have a straight chain structure, a branched chain structure or a cyclic structure, and may contain a heteroatom selected from the group consisting of O, N and S.

3. The aqueous colorant dispersion of claim 1, wherein the hydrophobic structural unit (a) comprises a structural unit represented by the following Formula (2): Formula (2) 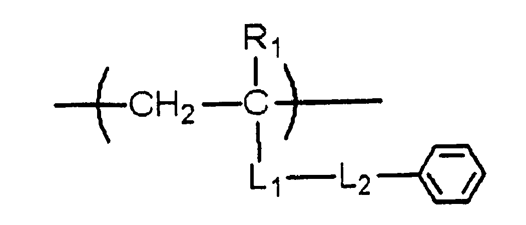 wherein R₁ represents a hydrogen atom, a methyl group or a halogen atom; L₁ represents -COO-, -OCO-, -CONH-, -O- or a substituted or unsubstituted phenylene group; and L2 represents a single bond or a divalent linking group having 1 to 30 carbon atoms, the divalent linking group may be saturated or unsaturated, may have a straight chain structure, a branched chain structure or a cyclic structure, and may contain a heteroatom selected from the group consisting of O, N and S.

4. The aqueous colorant dispersion of claim 1, wherein the hydrophobic structural unit (a) comprises a structural unit obtained by modifying benzyl acrylate or benzyl methacrylate.

5. The aqueous colorant dispersion of claim 1, wherein the ionic group comprised in the hydrophilic structural unit (b) is an anionic group.

6. The aqueous colorant dispersion of claim 5, wherein the anionic group comprises one or more groups selected from the group consisting of a carboxyl group, a phosphate group and a sulfonate group.

7. The aqueous colorant dispersion of claim 1, wherein the hydrophilic structural unit (b) comprises a structural unit obtained by modifying acrylic acid or methacrylic acid.

8. The aqueous colorant dispersion of claim 1, wherein the acid value of the polymer (B) is 10 mgKOH/g or more and less than 85 mgKOH/g.

9. The aqueous colorant dispersion of claim 1, wherein the colorant (A) is a pigment.

10. An aqueous ink for inkjet recording, comprising the aqueous colorant dispersion of claim 1.

## Patentansprüche

1. Wässrige Färbemitteldispersion, umfassend:
ein Färbemittel (A);
ein Polymer (B); und
ein wässriges flüssiges Medium (I),
wobei das Polymer (B) ein Copolymer ist, das eine hydrophile Struktureinheit und eine hydrophobe Struktureinheit umfasst;
worin die hydrophobe Struktureinheit eine hydrophobe Struktureinheit (a) umfasst, die einen Benzolring umfasst, der nicht direkt an ein Atom gebunden ist, das eine Hauptkette des Polymers (B) bildet;
worin die hydrophile Struktureinheit eine hydrophile Struktureinheit (b) umfasst, die eine ionische Gruppe umfasst;
worin der Gehalt der hydrophoben Struktureinheit in Bezug auf die Gesamtmasse des Polymers (B) 80 Masse-% übersteigt und weniger als 100 Masse-% beträgt;
worin das Polymer (B) eine Struktureinheit (c) umfasst, die sich von der hydrophoben Struktureinheit (a) und der hydrophilen Struktureinheit (b) unterscheidet; und
worin der Gehalt der Struktureinheit (c) in Bezug auf die Gesamtmasse des Polymers (B) 15 Masse-% übersteigt und weniger als 90 Masse-% beträgt, und die Struktureinheit (c) umfasst:
eine hydrophobe Struktureinheit, erhalten durch Modifizieren eines Alkylesters mit 1 bis 6 Kohlenstoffatomen von Methacrylsäure; oder
eine hydrophile Struktureinheit, die eine Alkylenoxid-Polymerstruktur oder eine Hydroxylgruppe aufweist;
worin die wässrige Färbemitteldispersion hergestellt ist durch die Schritte umfassend das Zugeben, zu einer Mischung (II) des Polymers (B) und eines organischen Lösungsmittels (C), das das Polymer (B) lösen oder dispergieren kann, des Färbemittels (A) und einer Lösung (III), die ein basisches Material umfasst und Wasser als eine Hauptkomponente hiervon aufweist; und Entfernen des organischen Lösungsmittels (C).

2. Wässrige Färbemitteldispersion gemäß Anspruch 1, worin die hydrophobe Struktureinheit (a) eine durch die folgende Formel (1) dargestellte Struktur aufweist: 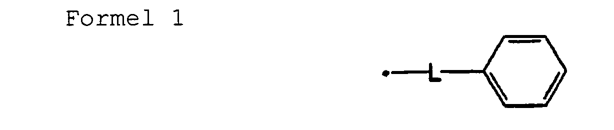 worin * einen Punkt darstellt, der mit der Hauptkette des Polymers (B) verbunden ist; und L eine divalente Verknüpfungsgruppe mit 1 bis 30 Kohlenstoffatomen darstellt, wobei die divalente Verknüpfungsgruppe gesättigt oder ungesättigt sein kann, eine geradkettige Struktur, eine verzweigte Kettenstruktur oder eine cyclische Struktur aufweisen kann und ein Heteroatom, ausgewählt aus der Gruppe bestehend aus O, N und S, enthalten kann.

3. Wässrige Färbemitteldispersion gemäß Anspruch 1, worin die hydrophobe Struktureinheit (a) eine Struktureinheit umfasst, die durch die folgende Formel (2) dargestellt wird: 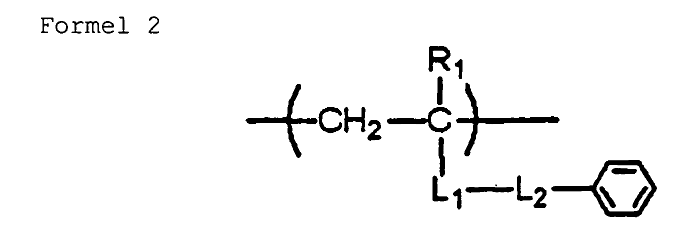 worin R₁ ein Wasserstoffatom, eine Methylgruppe oder ein Halogenatom darstellt; L₁ -COO-, -OCO-, -CONH-, -O- oder eine substituierte oder unsubstituierte Phenylengruppe darstellt; und L₂ eine Einfachbindung oder eine divalente Verknüpfungsgruppe mit 1 bis 30 Kohlenstoffatomen darstellt, worin die divalente Verknüpfungsgruppe gesättigt oder ungesättigt sein kann, eine geradkettige Struktur, eine verzweigtkettige Struktur oder eine cyclische Struktur aufweisen kann und ein Heteroatom enthalten kann, ausgewählt aus der Gruppe bestehend aus O, N und S.

4. Wässrige Färbemitteldispersion gemäß Anspruch 1, worin die hydrophobe Struktureinheit (a) eine Struktureinheit umfasst, die erhalten ist durch Modifizieren von Benzylacrylat oder Benzylmethacrylat.

5. Wässrige Färbemitteldispersion gemäß Anspruch 1, worin die ionische Gruppe, die in der hydrophilen Struktureinheit (b) enthalten ist, eine anionische Gruppe ist.

6. Wässrige Färbemitteldispersion gemäß Anspruch 5, worin die anionische Gruppe ein oder mehr Gruppen umfasst, ausgewählt aus der Gruppe bestehend aus einer Carboxylgruppe, einer Phosphatgruppe und einer Sulfonatgruppe.

7. Wässrige Färbemitteldispersion gemäß Anspruch 1, worin die hydrophile Struktureinheit (b) eine Struktureinheit umfasst, die erhalten ist durch Modifizieren von Acrylsäure oder Methacrylsäure.

8. Wässrige Färbemitteldispersion gemäß Anspruch 1, worin der Säurewert des Polymers (B) 10 mgKOH/g oder mehr und weniger als 85 mgKOH/g beträgt.

9. Wässrige Färbemitteldispersion gemäß Anspruch 1, worin das Färbemittel (A) ein Pigment ist.

10. Wässrige Tinte für die Tintenstrahlaufzeichnung, umfassend die wässrige Färbemitteldispersion gemäß Anspruch 1.

## Revendications

1. Dispersion aqueuse de colorant comprenant :
un colorant (A) ;
un polymère (B) ; et
un milieu liquide aqueux (I),
le polymère (B) étant un copolymère comprenant une unité structurelle hydrophile et une unité structurelle hydrophobe ;
l'unité structurelle hydrophobe comprenant une unité structurelle hydrophobe (a) comprend un cycle benzène qui n'est pas directement lié à un atome qui forme une chaîne principale du polymère (B) ;
l'unité structurelle hydrophile comprenant une unité structurelle hydrophile (b) comprenant un groupe ionique ;
une teneur de l'unité structurelle hydrophobe par rapport à une masse totale du polymère (B) excédant 80 % en masse et étant inférieure à 100 % en masse ;
le polymère (B) comprenant une unité structurelle (c) différente de l'unité structurelle hydrophobe (a) et de l'unité structurelle hydrophile (b) ; et
dans laquelle une teneur de l'unité structurelle (c) par rapport à une masse totale du polymère (B) excédant 15 % en masse et étant inférieure à 90 % en masse et l'unité structurelle (c) comprend :
une unité structurelle hydrophobe obtenue par modification d'un ester alkylique ayant de 1 à 6 atomes de carbone d'acide méthacrylique ; ou
une unité structurelle hydrophile présentant une structure polymère d'oxyde d'alkylène ou un groupe hydroxyle ;
dans laquelle la dispersion aqueuse de colorant est produite par les étapes comprenant l'addition, à un mélange (II) du polymère (B) et d'un solvant organique (C) capable de dissoudre ou de disperser le polymère (B), du colorant (A) et d'une solution (III) qui comprend un matériau basique et qui présente de l'eau comme son constituant principal ; et l'élimination du solvant organique (C).

2. Dispersion aqueuse de colorant selon la revendication 1, dans laquelle l'unité structurelle hydrophobe (a) présente une structure représentée par la formule (1) suivante : 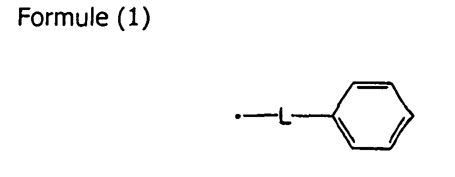 dans laquelle * représente un point lié à la chaîne principale du polymère (B) ; et L représente un groupe de liaison divalent ayant de 1 à 30 atomes de carbone, le groupe de liaison divalent peut être saturé ou insaturé, peut présenter une structure de chaîne linéaire, une structure de chaîne ramifiée ou une structure cyclique, et peut contenir un hétéroatome choisi dans le groupe constitué de O, N et S.

3. Dispersion aqueuse de colorant selon la revendication 1, dans laquelle l'unité structurelle hydrophobe (a) comprend une unité structurelle représentée par la formule (2) suivante : 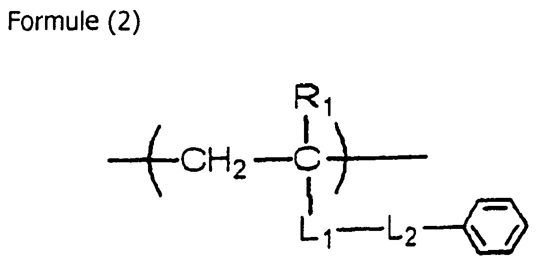 dans laquelle R₁ représente un atome d'hydrogène, un groupe méthyle ou un atome d'halogène ; L₁ représente -COO-, -OCO-, -CONH-, -O-, ou un groupe phénylène substitué ou non substitué ; et L₂ représente une liaison simple ou un groupe de liaison divalent ayant de 1 à 30 atomes de carbone, le groupe de liaison divalent peut être saturé ou insaturé, peut présenter une structure de chaîne linéaire, une structure de chaîne ramifiée ou une structure cyclique, et peut contenir un hétéroatome choisi dans le groupe constitué de O, N et S.

4. Dispersion aqueuse de colorant selon la revendication 1, dans laquelle l'unité structurelle hydrophobe (a) comprend une unité structurelle obtenue par modification d'acrylate de benzyle ou de méthacrylate de benzyle.

5. Dispersion aqueuse de colorant selon la revendication 1, dans laquelle le groupe ionique compris dans l'unité structurelle hydrophile (b) est un groupe anionique.

6. Dispersion aqueuse de colorant selon la revendication 5, dans laquelle le groupe anionique comprend un ou plusieurs groupes choisis dans le groupe constitué d'un groupe carboxyle, d'un groupe phosphate et d'un groupe sulfonate.

7. Dispersion aqueuse de colorant selon la revendication 1, dans laquelle l'unité structurelle hydrophile (b) comprend une unité structurelle obtenue par modification d'acide acrylique ou d'acide méthacrylique.

8. Dispersion aqueuse de colorant selon la revendication 1, dans laquelle l'indice acide du polymère (B) est de 10 mg de KOH/g ou supérieur et inférieur à 85 mg de KOH/g.

9. Dispersion aqueuse de colorant selon la revendication 1, dans laquelle le colorant (A) est un pigment.

10. Encre aqueuse pour enregistrement à jet d'encre, comprenant la dispersion aqueuse de colorant selon la revendication 1.
